# EUROPEAN PATENT APPLICATION

(11) **EP 4 674 260 A1**
(43) Date of publication of application: **07.01.2026**
(21) Application number: 24185713.5
(22) Date of filing: 01.07.2024
(51) Int. Cl.: A01K 61/13, A01K 63/04

(54) **SYSTEM AND METHOD FOR INTRODUCING NITROGEN INTO A CASING WITH WATER**

(71) Applicant: Blå Biotek AS, 6392 Vikebukt (NO)
(72) Inventor: GULLA, Ivar, 1410 Kolbotn (NO); ONKEN, Ralf Günter, 1553 Son (NO)
(74) Representative: Eisenführ Speiser

(57) **Abstract**

The invention relates to a method and system for introducing gas into a casing with water. A casing 5 with water 7 and Salmonidae 6, a nitrogen providing unit 2 and a nitrogen introducer 3, 4 are provided, wherein the nitrogen introducer 3, 4 is connected to the nitrogen providing unit 2. Nitrogen is introduced into the casing 5 by using the nitrogen providing unit 2 and the nitrogen introducer 3, 4. Preferentially, the nitrogen is introduced intermittently. Moreover, preferentially, the nitrogen is introduced into the water such that the oxygen saturation in the water is below 80% and/or above 40%. In an example, the oxygen saturation is lower in the upper part of the casing than in the lower part of the casing. Introducing the nitrogen into the casing 5 with the water and the Salmonidae allows to effectively control the ectoparasites on the Salmonidae, without harming the Salmonidae.

## Description

### FIELD OF THE INVENTION

The invention relates to a system and a method for introducing gas into a casing with water. The invention further relates to a computer program for controlling the system.

### BACKGROUND OF THE INVENTION

The European patent EP 2 962 556 B1 discloses a method for monitoring and controlling ectoparasites of the genus Caligus or Lepeophtheiris on fish in an aquaculture facility, wherein the fish is any of the salmonid species including Atlantic salmon (Salmo salar). The monitoring and control are based on the detection of optical fluorescence from the ectoparasites. A fish potentially comprising ectoparasites is optically illuminated using an optical excitation source with a spectral composition capable of exciting optical fluorescence of anatomical structures in the ectoparasites in the absence of any artificially added fluorophore, wherein the optical excitation source is configured to emit optical radiation having a wavelength in the range of approximately 360 to 400 nm. Optical fluorescence to be emitted from the anatomical structures of an ectoparasite, which is present in the illuminated area, is caused, and the optical fluorescence is detected using one or more optical detectors together with appropriate spectral filters arranged to detect substantially only the optical fluorescence from the anatomical structures of the one or more ectoparasites. An electronic signal representing the optical fluorescence is produced, which is communicated to a recording and display means, thereby detecting the presence or absence of ectoparasites on fish in the illuminated area and providing necessary information for documentation and control of the ectoparasites. The method further includes that an ectoparasite is damaged and subsequently removed from a fish using acoustic radiation, wherein this removal comprises a) detecting and localizing an ectoparasite on a fish based on optical fluorescence as described above, b) using an acoustic transducer with a suitable f-number to produce acoustic radiation in water in the form of a converging wave reaching a minimum diameter at a focal plane and with a focal point defined by the point of maximum acoustic intensity in the focal plane, c) positioning the acoustic transducer with respect to an ectoparasite so that the focal point of the transducer is substantially at the top surface of the ectoparasite and the acoustic radiation is propagating into the tissue of the ectoparasite, d) operating the transducer with suitable values of acoustic frequency, acoustic power and pulse duration such that energy absorbed in the tissue of an ectoparasite from the incident acoustic radiation is sufficient to damage or kill the ectoparasite without causing damage to the fish, and e) resulting in removal of the ectoparasite from the fish. It is also known to remove lice from Atlantic salmons by pumping the salmons into a warm water bath. However, since Atlantic salmons are cold-water fishes, at least the warm water bath can hurt the Atlantic salmons and even kill them.

### SUMMARY OF THE INVENTION

It is an object of the present invention to provide a system and a method for introducing gas into a casing with water, which allows for an alternative way of controlling ectoparasites on the Salmonidae, which is more advantageous for the Salmonidae.

In a first aspect of the present invention, a method for introducing gas into a casing is provided, wherein the method comprises:
- providing a casing with water and Salmonidae,
- providing a nitrogen providing unit for providing nitrogen and a nitrogen introducer, which is connected to the nitrogen providing unit, and
- introducing nitrogen into the casing by using the nitrogen providing unit and the nitrogen introducer.

It has been found that, if a nitrogen providing unit provides nitrogen and a nitrogen introducer, which is connected to the nitrogen providing unit, introduces the nitrogen into the casing, ectoparasites on the Salmonidae can be effectively controlled, without harming the Salmonidae. In particular, the ectoparasites might be affected such that they fall off the Salmonidae, which allows for a very effective control of the ectoparasites on the outside of the Salmonidae.

The nitrogen providing unit can be a storage unit in which nitrogen can be stored and which can provide the stored nitrogen. However, the nitrogen providing unit can also be another unit that provides nitrogen like a nitrogen production unit which produces nitrogen which then can be introduced into the casing.

Preferentially, the nitrogen providing unit and the nitrogen introducer are used for introducing the nitrogen into the casing intermittently. It is further preferred that the temporal distance between consecutive nitrogen introduction events is at least 30 min. It has been found that, if the nitrogen is not introduced continuously, but intermittently, wherein preferentially the temporal distance between consecutive nitrogen introduction events is at least 30 min, the ectoparasites can even more effectively be controlled on the outside of the Salmonidae, still without harming the Salmonidae.

In an embodiment, the temporal distance between consecutive nitrogen introduction events is longer than 30 min. For example, the temporal distance between consecutive nitrogen introduction events may be at least 1 hour, within the range from 2 hours to 24 hours, or even one day, two days, three days, or a larger number of days.

The temporal distance could also be regarded as being a temporal interval. Preferentially, it is measured from the end time of a previous nitrogen introduction event to the start time of a current or next nitrogen introduction event. Hence, preferentially it is measured from the end time to the start time of two consecutive nitrogen introduction events.

It is further preferred that the nitrogen introducer is a gas diffuser. By using the gas diffuser as the nitrogen introducer, the nitrogen can be introduced into the water within the casing in a relatively gentle way, thereby further contributing to not harming the Salmonidae within the casing.

Preferentially, the nitrogen is introduced into the casing by using several nitrogen introducers that are arranged at different locations. It is further preferred that the casing comprises an upper part and a lower part, wherein at least one of the nitrogen introducers is arranged at the upper part of the casing and at least one other of the nitrogen introducers is arranged at the lower part of the casing. By using several nitrogen introducers, which are arranged at different locations, it is more easily possible to create desired oxygen saturation patterns within the casing. For instance, in an example, the nitrogen introducers can be controlled such that the oxygen saturation within the casing is substantially homogeneous. However, the nitrogen introducers can also be controlled such that, for instance, the oxygen saturation is lower in the upper part of the casing than in the lower part of the casing.

The nitrogen introducer can be placed inside the casing. In particular, the nitrogen introducer can be integrated in a wall or net of the casing and/or it can be attached to the wall or net of the casing. However, it can also be placed outside of the casing.

If several nitrogen introducers are present, one or several of the nitrogen introducers can be placed inside the casing and/or one or several of the nitrogen introducers can be placed outside of the casing. If one or several of the nitrogen introducers are arranged outside of the casing, they can nevertheless introduce nitrogen directly or indirectly into the casing. For instance, the nitrogen introducers can be arranged outside of the casing and the casing can be permeable for gas and/or water, wherein the nitrogen introducers can introduce the nitrogen into the casing through a permeable wall or net of the casing or, if water is flowing/streaming into the casing, the nitrogen introducers can indirectly introduce the nitrogen into the casing by introducing the nitrogen into the water which then flows/streams into the casing.

However, preferentially one or several nitrogen introducers, which preferentially are diffusers, are placed and hence located within the casing. In a preferred embodiment, all nitrogen introducers or, if only a single nitrogen introducer is used, the single nitrogen introducer is placed within the casing. It should be noted that the term "placed inside the casing" can mean that the one or several nitrogen introducers are integrated in or attached to a wall or net of the casing. However, it can also mean that the one or several nitrogen introducers are located inside the casing, without being integrated in or attached to the wall or net of the casing.

It is further preferred that the water within the casing is seawater. If the water within the casing is seawater, the casing with the Salmonidae can be within the open sea, wherein it is not required to, for instance, pump the Salmonidae from the casing to a chamber for flushing ectoparasites off the Salmonidae or to a tank or the like with freshwater or hot water for reducing the number of ectoparasites. This allows for a simplified construction of the system and a simplified method for controlling ectoparasites on the Salmonidae which is also not very stressful for the Salmonidae because they can remain in the casing.

The method can include applying a further technique for controlling the number of ectoparasites on the Salmonidae which does not use nitrogen. This technique can include using a) freshwater and/or b) an increased temperature and/or c) one or several other steps for removing ectoparasites from the Salmonidae. For instance, the casing with the Salmonidae can comprise freshwater and/or hot water, wherein the nitrogen can be introduced in this casing for removal of ectoparasites. The Salmonidae can have been pumped from the sea into the casing, which might also be regarded as being a container or tank, with the freshwater and/or the hot water. Generally, exposing Salmonidae to fresh water or using hot water can be stressful for the fish. By combing this technique with nitrogen introduction the treatment time can be reduced, for instance, to half.

In an example, the casing is located on a boat like a well-boat, wherein the Salmonidae are pumped from the sea into the casing on the boat. In this casing, which might also be regarded as being a container or tank, freshwater and/or hot water can be present and nitrogen is introduced into this casing. Providing the casing with the freshwater and/or the hot water and introducing the nitrogen into the casing on the boat can be advantageous, because it then is not required to equip a casing in the open sea like the Atlantic or the Pacific with these functionalities. It would just be required to equip the boat accordingly.

The term "hot water" preferentially refers to water within a temperature range from 28 °C to 34 °C.

In an example, the Salmonidae are Atlantic salmon and/or rainbow trout. Moreover, in an example, ectoparasites adhere to the Salmonidae, wherein the ectoparasites are lice of the family Caligidae, amoebae, in particular amoebozoans of the genus Neoparamoeba, microsporidea, and/or bacteria of the genus Branchiomonas. It has been found that, especially if the Salmonidae are Atlantic salmon or rainbow trout, and/or if the ectoparasites are lice of the family Caligidae, amoebae, in particular amoebozoans of the genus Neoparamoeba, microsporidea, and/or bacteria of the genus Branchiomonas, by using nitrogen ectoparasites can be effectively removed and hence controlled, without harming the Salmonidae.

Preferentially, the nitrogen is introduced into the water such that the oxygen saturation in the water is below 80%, preferentially below 70% and even further preferred below 60%. It is also preferred that the nitrogen is introduced into the water such that the oxygen saturation in the water is above 40%, particularly above 50%. It has been found that, if these percentage values for the oxygen saturation in the water are used, the Salmonidae still have sufficient oxygen for not being harmed, whereas the ectoparasites can be removed from the Salmonidae. In this sense, it has been found that these percentage can be regarded as being an optimum for a balance between not harming the Salmonidae and removing ectoparasites.

The percentages preferentially mean that at least one location within the casing the respective oxygen saturation value is present.

The casing can be located in the sea and permeable for the water, but not for the Salmonidae, or the casing can be outside of the sea. Thus, the casing can be any means which restricts the Salmonidae within a certain predefined region, wherein the water might be outside and inside of the casing. When located in the sea, the casing can be adapted to allow sea water to freely flow through the casing. For instance, the casing can be or comprise a net structure. This allows the water of the open sea to flow through the casing. However, a casing located in the sea can also comprise means to restrict and control water flow into and out of the casing. For example, the casing may be or comprise a closed containment system or a semi-closed containment system. The closed containment system or semi-closed containment system may comprise means, for instance, tubing, pumps and/or filtering systems, for controlling water flow into and out of the closed containment system or semi-closed containment system, while the exterior of the casing is completely or mostly non-permeable for water. However, the casing can also be a tank or the like outside of the sea, for instance, on a boat like a well-boat. Such a casing may also be or comprise a closed containment system or a semi-closed containment system.

In an example detectors are used for detecting a property of the water, wherein the nitrogen is introduced into the casing based on the detected property. For instance, the detectors can be used for detecting at least one of an oxygen saturation in the water, a nitrogen saturation in the water, a parameter, in particular a total gas saturation in the water, indicative of the oxygen and/or nitrogen saturation in the water, water current, temperature of the water and salt concentration in the water as the property. It also has been found that, if the introduction of the nitrogen into the water within the casing is controlled depending on at least one of the oxygen saturation in the water, the nitrogen saturation in the water, a parameter, in particular the total gas saturation in the water, indicative of the oxygen and/or nitrogen saturation in the water, the water current, the temperature of the water and the salt concentration in the water, the removal of ectoparasites from the Salmonidae can be controlled more effectively as well as more safely for the Salmonidae. In particular, such a control allows to more reliably provide a desired oxygen saturation distribution within the casing.

Preferentially, the introduction of the nitrogen into the water in the casing is controlled by determining the temporal distance between consecutive nitrogen introduction events and/or the amount of nitrogen introduced at the respective nitrogen introduction event, particularly based on at least one detected property.

The nitrogen can be introduced into the casing such that the water comprises a predetermined spatial distribution of the oxygen saturation in the casing. For example, the nitrogen can be introduced into the casing such that the oxygen saturation is spatially homogenous in the casing. In another example, the nitrogen can be introduced into the casing such that the oxygen saturation in an upper, or top, part of the casing differs from the oxygen saturation in a lower, or bottom, part of the casing. In particular, the nitrogen can be introduced into the casing such that the oxygen saturation is lower in the upper part of the casing than in the lower part of the casing.

For instance, if the nitrogen introduction is controlled such that the oxygen saturation is substantially spatially homogeneous within the casing, an oxygen saturation within the entire casing can be provided, which is optimal regarding the balance between removing ectoparasites and not harming the Salmonidae. For instance, the nitrogen introduction can be controlled such that throughout the casing the oxygen saturation is within a range from 50% to 60%. If, in another example, the oxygen saturation is higher in the lower part of the casing than in the upper part of the casing, the oxygen saturation can be such in the upper part of the casing that at least some of the Salmonidae are temporarily affected and might fall the lower part of the casing, where, due to the higher oxygen saturation, the Salmonidae become active again. Due to the lower oxygen saturation in the upper part of the casing, the ectoparasites can be even more effectively removed from the Salmonidae, wherein still the Salmonidae are not harmed. This can allow for a further improved control of the ectoparasites on the Salmonidae.

In an embodiment, a number of the ectoparasites on the Salmonidae is determined, wherein the nitrogen is introduced into the casing based on the determined number of the ectoparasites. This allows to control the nitrogen introduction such that the Salmonidae have a desired number of ectoparasites more reliably.

The number of ectoparasites can be determined automatically, for instance, by using the method described in EP 2 962 556 B1 or by using another ectoparasites detection method, or it can be determined by a person who counts the ectoparasites on the Salmonidae. The number of ectoparasites on a subgroup of all Salmonidae in the casing can be determined and the determined numbers can be averaged to determine an average number of ectoparasites per single Salmonidae as the number of the ectoparasites on the Salmonidae.

In another aspect of the present invention a system for introducing gas into a casing with water is presented, wherein the system comprises a) a casing with water and Salmonidae, b) a nitrogen providing unit for providing nitrogen, and c) a nitrogen introducer connected to the nitrogen providing unit, wherein the nitrogen providing unit and the nitrogen introducer are configured to introduce the nitrogen into the casing. Preferentially, the system further comprises a controller configured to control the system to intermittently introduce nitrogen into the casing.

Preferentially, the controller is configured such that the temporal distance between consecutive nitrogen introduction events is at least 30 min. Moreover, preferentially, the nitrogen introducer of the system is a gas diffuser. The system can comprise one or several nitrogen introducers, wherein, if the system comprises several nitrogen introducers, preferentially they are arranged at different locations. For instance, the casing of the system can comprise an upper part and a lower part, wherein at least one of the nitrogen introducers can be arranged at the upper part of the casing and at least one other of the nitrogen introducers can be arranged at the lower part of the casing.

In an example, the water within the casing of the system is seawater. Moreover, preferentially, the Salmonidae in the casing of the system are Atlantic salmon and/or rainbow trout.

In an example, the controller is configured to introduce the nitrogen into the water such that the oxygen saturation in the water is below 80%, preferentially below 70%. Moreover, in an example, the controller is configured to introduce the nitrogen into the water such that the oxygen saturation in the water is above 40%, preferentially above 50%. Thus, for instance, the control can be configured such that the oxygen saturation is within the range from 40% to 80%.

In an example, the casing of the system is located in the sea and permeable for the water, but not for the Salmonidae. The casing can be outside of the sea.

Preferentially, the system comprises detectors that are configured to detect a property of the water, wherein the nitrogen is introduced into the casing based on the detected property. The detectors can be configured to detect at least one of an oxygen saturation in the water, water current, temperature of the water and salt concentration in the water as the property. The system can be configured to introduce the nitrogen into the casing such that the water comprises a predetermined spatial distribution of the oxygen saturation in the casing. For instance, the system can be configured to introduce the nitrogen into the casing such that the oxygen saturation is spatially homogenous in the casing. However, the casing comprises an upper part and a lower part, wherein in an embodiment the system can also be configured to introduce the nitrogen into the casing such that the oxygen saturation is lower in the upper part of the casing than in the lower part of the casing.

The system can also be configured to determine a number of ectoparasites on the Salmonidae and to introduce the nitrogen into the casing based on the determined number of the ectoparasites.

In a further aspect of the present invention a computer program for controlling a system for introducing gas into a casing with water is presented, wherein the computer program comprises program code means configured to control the system to introduce nitrogen into the casing.

It shall be understood that the system for introducing gas into a casing with water, the method for introducing gas into a casing with water and the computer program for controlling the system have similar and/or identical preferred embodiments, in particular, as defined in the dependent claims.

It shall be understood that a preferred embodiment of the present invention can also be any combination of the dependent claims or above embodiments with the respective independent claim.

These and other aspects of the invention will be apparent from and elucidated with reference to the embodiments described hereinafter.

### BRIEF DESCRIPTION OF THE EMBODIMENTS

In the following the drawings:
- Fig. 1: shows schematically and exemplarily an embodiment of a system for introducing gas into a casing with water, and
- Fig. 2: shows a flowchart exemplarily illustrating an embodiment of a system for introducing gas into a casing with water.

### DETAILED DESCRIPTION OF EMBODIMENTS

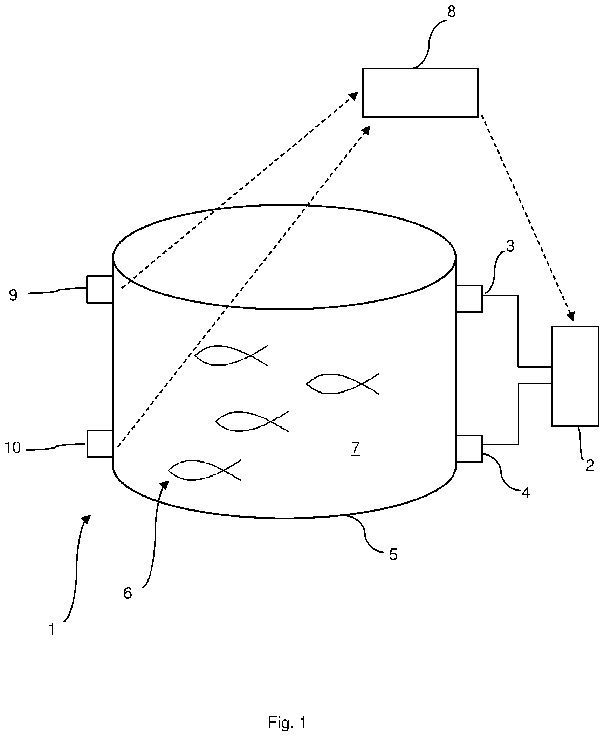

Fig. 1 shows schematically and exemplarily an embodiment of a system 1 for introducing gas into a casing 5 with water 7 and Salmonidae 6.

In this embodiment, the Salmonidae 6 are Atlantic salmons with ectoparasites, wherein the ectoparasites are lice of the family Caligidae. Moreover, the casing 5 is located in the open water and has a net structure such that the water 7 can enter and leave the casing 5, wherein the Atlantic salmons 6 cannot leave the casing 5. Thus, water from, for instance, the Atlantic Ocean or the Pacific Ocean can flow through the casing 5.

The system 1 comprises a nitrogen providing unit 2 for providing nitrogen and nitrogen introducers 3, 4 that are connected to the nitrogen providing unit 2 and the casing 5, wherein the nitrogen providing unit 2 and the nitrogen introducers 3, 4 are configured to introduce the nitrogen into the casing 5. In this embodiment, the nitrogen providing unit 2 is a storage unit in which nitrogen can be stored and which can provide the stored nitrogen. However, the nitrogen providing unit can also be another unit that provides nitrogen like a nitrogen production unit which produces nitrogen which then can be introduced into the casing 5.

In this embodiment, the system 1 further comprises a controller 8 configured to control the system 1 to intermittently introduce the nitrogen into the casing 5. The controller 8 can be connected to the nitrogen providing unit 2 and/or the nitrogen introducers 3, 4 by a wired or wireless data connection.

The controller 8 can be configured to control the nitrogen providing unit 2 and/or the nitrogen introducers 3, 4 such that the temporal distance between consecutive nitrogen introduction events is at least 30 min.

The system 1 further comprises detectors 9, 10 configured to detect at least one of an oxygen saturation in the water 7, a nitrogen saturation in the water 7, a parameter, in particular a total gas saturation in the water 7, indicative of the oxygen and/or nitrogen saturation in the water 7, water current, i.e., especially the current of the water 7 in the casing 5 and/or outside the casing 5, the temperature of the water 7 and the salt concentration in the water 7, wherein the controller 8 can be configured to control the introduction of the nitrogen into the casing 5 based on at least one of these properties. Preferentially, the controller 8 is configured to control the nitrogen introduction into the casing 5 such that the oxygen saturation in the water 7 within the casing 5 is below 80%, further preferred below 70% and most preferred below 60%. Moreover, the controller 8 is preferentially configured to control the nitrogen introduction into the casing 5 such that the oxygen saturation within the water 7 in the casing 5 is above 40% and further preferred above 50%.

In an embodiment, the location of the Atlantic salmons 6 is determined, for instance based on a camera image of the Atlantic salmons 6 in the casing 5 and manual or automated detection of Atlantic salmons 6 in the camera image, and the controller 8 is configured to control the introduction of the nitrogen such that the oxygen saturation in the water 7 within the casing 5 has the desired percentage or is within the desired percentage range in an area containing all or at least the majority of Atlantic salmons 6.

The controller 8 can be configured to control the nitrogen introduction into the casing 5 such that the water 7 comprises a predetermined spatial distribution of the oxygen saturation in the casing 5. For instance, the nitrogen introduction can be such that the oxygen saturation is spatially homogeneous in the casing 5. However, the nitrogen introduction can also be such that another oxygen saturation pattern is created. For instance, the controller 8 can be configured to control the nitrogen introduction such that the oxygen saturation is lower in an upper part of the casing 5 than in a lower part of the casing 5. This can allow to decrease the oxygen saturation in the upper part of the casing 5 such that the Atlantic salmons 6 might be temporarily affected such that they fall into the lower part of the casing 5, where they become active again. The decreased oxygen saturation in the upper part of the casing 5 can lead to a further improved removal of the lice from the Atlantic salmons 6, still without harming the Atlantic salmons 6.

The nitrogen introducers 3, 4 are arranged at different locations, i.e., in this embodiment, one or several of the nitrogen introducers are arranged at the upper part of the casing 5 and one or several other of the nitrogen introducers are introduced at the lower part of the casing. The nitrogen introducers are preferentially gas diffusers. However, also other introduction elements can be used which are able to introduce nitrogen into the water 7 within the casing 5.

The nitrogen can also be introduced into the casing 5 based on a determined number of lice. For instance, a small amount of Atlantic salmons 6 like 30 Atlantic salmons can be taken out of the water 7 and the number of lice per Atlantic salmon can be determined. The nitrogen introduction then can be controlled depending on the counted number of lice per Atlantic salmon. This number can be an average number with respect to the, for instance, 30 Atlantic salmons taken out of the water 7 within the casing 5. The counting of the lice can be done manually or automatically based on a camera image of the respective Atlantic salmon by using an image processing algorithm being configured to detect the lice in the camera images and to count the detected lice. The control based on the determined number of lice per Atlantic salmon can be a manual control, a semi-automatic control or a fully automatic control that is carried out by the controller 8.

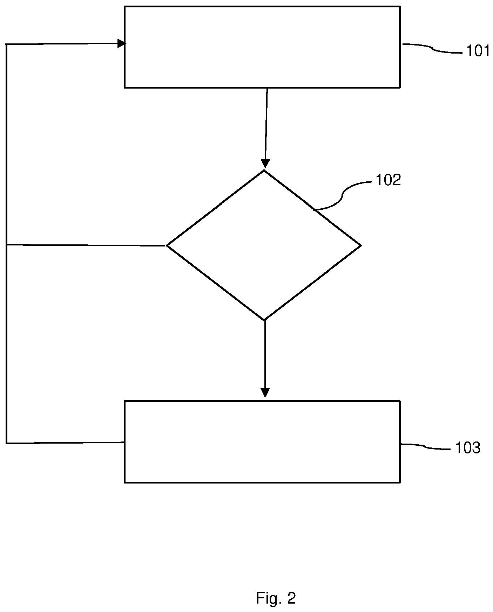

In the following, an embodiment of a method for introducing gas into a casing with water will exemplarily be described with reference to a flowchart shown in Fig. 2.

In step 101, a property of the water within the casing and/or a number of parasites per salmon are determined. For instance, the oxygen saturation of the water within the casing and the number of ectoparasites per salmon can be determined in step 101.

In step 102, it is determined whether the properties or parameters determined in step 101 require a next nitrogen introduction event. For instance, if the oxygen saturation is above a predefined upper threshold of, for instance, 70% or if the number of ectoparasites per salmon is larger than a predefined threshold, in step 102 it can be determined that a next nitrogen introduction event should be carried out.

In step 103, a nitrogen introduction event is carried out, i.e., nitrogen is introduced into the water within the casing.

Although in an above described embodiment the temporal distance between consecutive nitrogen introduction events is at least 30 min, it is also possible that the temporal distance between consecutive nitrogen introduction events is longer than 30 min, for instance, 1 hour, 2 hours up to 24 hours, or even one day, two days, three days, or a larger number of days. It is also possible that the temporal distance between consecutive nitrogen introduction events is determined in dependence of other events such as for example the stage of the tidal cycle.

Although in an above described embodiment several nitrogen introducers are used for introducing the nitrogen into the water within the casing, it is also possible that only a single nitrogen introducer is used for introducing the nitrogen into the water within the casing.

Although in an above described embodiment the casing with the water is located in the open sea such that the water within the casing is sea water, it is also possible that the Salmonidae swim in freshwater, i.e., that freshwater is within the casing.

Although in an above described embodiment the Salmonidae are Atlantic salmons, also other types of Salmonidae can be present within the casing like rainbow trout.

Although in an above described embodiment the ectoparasites are lice of the family Caligidae, the ectoparasites can also be of another type, for instance, they can be amoebae, in particular amoebozoans of the genus Neoparamoeba, microsporidea, and/or bacteria of the genus Branchiomonas.

Although in an above described embodiment the casing is located in the open sea and permeable to the water, i.e., for instance, at least partly comprises a net structure as walls for the casing, the casing can also be outside of the sea. For instance, it can be a tank on a ship, barge or onshore. In particular, the casing can be a tank on a well-boat or on another kind of boat, ship or barge.

Although in an above described embodiment a controller is used for automatically controlling the nitrogen introduction based on, for instance, the oxygen saturation in the water within the casing or the number of ectoparasites per salmon, this control can also be performed manually or semi-automatically. For instance, a person can introduce a certain amount of nitrogen into the water within the casing, after it has been detected that the oxygen saturation is higher than a predefined threshold or the number of ectoparasites per salmon is larger than a predefined threshold.

Other variations to the disclosed embodiments can be understood and effected by those skilled in the art in practicing the claimed invention, from a study of the drawings, the disclosure, and the appended claims.

In the claims, the word "comprising" does not exclude other elements or steps, and the indefinite article "a" or "an" does not exclude a plurality.

A single unit or device may fulfil the functions of several items recited in the claims. The mere fact that certain measures are recited in mutually different dependent claims does not indicate that a combination of these measures cannot be used to advantage.

The steps described above and/or the control of the system for introducing gas into a casing with water in accordance with the method for introducing gas into a casing with water can be implemented as program code means of a computer program and/or as dedicated hardware.

A computer program may be stored/distributed on a suitable medium, such as an optical storage medium or a solid-state medium, supplied together with or as part of other hardware, but may also be distributed in other forms, such as via the Internet or other wired or wireless telecommunication systems.

Any reference signs in the claims should not be construed as limiting the scope.

The invention relates to a method and system for introducing gas into a casing with water. A casing with water and Salmonidae, a nitrogen providing unit and a nitrogen introducer are provided, wherein the nitrogen introducer is connected to the nitrogen providing unit. Nitrogen is introduced into the casing by using the nitrogen providing unit and the nitrogen introducer. Preferentially, the nitrogen is introduced intermittently. Moreover, preferentially, the nitrogen is introduced into the water such that the oxygen saturation in the water is below 80% and/or above 40%. In an example, the oxygen saturation is lower in the upper part of the casing than in the lower part of the casing. Introducing the nitrogen into the casing with the water and the Salmonidae allows to effectively control the ectoparasites on the Salmonidae, without harming the Salmonidae.

## Claims

1. A method for introducing gas into a casing with water, the method comprising:
- providing a casing (5) with water (7) and Salmonidae (6),
- providing a nitrogen providing unit (2) for providing nitrogen and a nitrogen introducer (3, 4), which is connected to the nitrogen providing unit (2),
- introducing nitrogen into the casing (5) by using the nitrogen providing unit (2) and the nitrogen introducer (3, 4).

2. The method as defined by claim 1, wherein the nitrogen providing unit (2) and the nitrogen introducer (3, 4) are used for introducing the nitrogen into the casing (5) intermittently.

3. The method as defined by claim 2, wherein the temporal distance between consecutive nitrogen introduction events is at least 30 min.

4. The method as defined by any of the preceding claims, wherein the nitrogen is introduced into the casing (5) by using several nitrogen introducers (3, 4) that are arranged at different locations.

5. The method as defined by claim 4, wherein the casing (5) comprises an upper part and a lower part, wherein at least one of the nitrogen introducers (3, 4) is arranged at the upper part of the casing (5) and at least one other of the nitrogen introducers (3, 4) is arranged at the lower part of the casing (5).

6. The method as defined by any of the preceding claims, wherein the water (7) within the casing (5) is seawater.

7. The method as defined by any of the preceding claims, wherein the nitrogen is introduced into the water (7) such that the oxygen saturation in the water (7) is below 80% and/or above 40%.

8. The method as defined by any of the preceding claims, wherein detectors (9, 10) are used for detecting a property of the water (7), wherein the nitrogen is introduced into the casing (5) based on the detected property.

9. The method as defined by claim 8, wherein the detectors (9, 10) are used for detecting at least one of an oxygen saturation in the water (7), water current, temperature of the water (7) and salt concentration in the water (7) as the property.

10. The method as defined by claim 9, wherein the nitrogen is introduced into the casing (5) such that the water (7) comprises a predetermined spatial distribution of the oxygen saturation in the casing (5).

11. The method as defined by any of the preceding claims, wherein the casing (5) comprises an upper part and a lower part, wherein the nitrogen is introduced into the casing (5) such that the oxygen saturation is lower in the upper part of the casing (5) than in the lower part of the casing (5).

12. The method as defined by any of the preceding claims, wherein a number of ectoparasites on the Salmonidae (6) is determined, wherein the nitrogen is introduced into the casing (5) based on the determined number of the ectoparasites.

13. A system for introducing gas into a casing (5) with water (7), the system (1) comprising:
- a casing (5) with water (7) and Salmonidae (6),
- a nitrogen providing unit (2) for providing nitrogen,
- a nitrogen introducer (3, 4) connected to the nitrogen providing unit (2), wherein the nitrogen introducer (3, 4) is configured to introduce the nitrogen into the casing (5).

14. The system as defined by claim 13, wherein the system (1) further comprises a controller (8) configured to control the system (1) to intermittently introduce nitrogen into the casing (5).

15. A computer program for controlling a system for introducing gas into a casing (5) with water (7), the computer program comprising program code means configured to control the system to introduce nitrogen into the casing (5).
